# EUROPÄISCHE PATENTSCHRIFT

(11) **EP 3 722 681 B1**
(45) Veröffentlichungstag und Bekanntmachung des Hinweises auf die Patenterteilung: **15.01.2025**
(21) Anmeldenummer: 20165823.4
(22) Anmeldetag: 26.03.2020
(51) Int. Cl.: F24D 3/16, F24F 5/00, F24D 3/14

(54) **VORRICHTUNG ZUM KLIMATISIEREN EINES RAUMES**
DEVICE FOR AIR CONDITIONING A ROOM
CLIMATISEUR D'UN ESPACE

(30) Priorität: 08.04.2019 AT 503072019
(43) Veröffentlichungstag der Anmeldung: 14.10.2020
(73) Patentinhaber: KE KELIT GmbH, 4020 Linz (AT)
(72) Erfinder: Pöchhacker, Martin, 3251 Purgstall (AT)
(74) Vertreter: Hübscher & Partner Patentanwälte GmbH

(56) Entgegenhaltungen:
- EP-A2- 1 743 761
- DE-A1- 3 008 532
- DE-U1- 202010 011 801
- DE-U1- 202012 103 540
- DE-U1- 29 607 324

## Beschreibung

Die Erfindung bezieht sich auf eine Vorrichtung zum Klimatisieren eines Raumes mit wenigstens einem einer Raumdecke zugeordneten, von einem Temperierfluid durchströmten Wärmetauscher, sowie mit Halteelementen und mit Wärmeübertragungskörpern, wobei der Wärmetauscher von einer Rohrschlange gebildet ist, die zwischen einer tragenden und einer abgehängten Raumdecke angeordnet und über Halteelemente an der tragenden Raumdecke befestigt und von diesen gehalten ist.

Aus dem Stand der Technik sind Vorrichtungen zum Klimatisieren eines Raumes bekannt (EP 2410246 A2, DE 202010011801 U1), die einen von einem Temperierfluid durchströmten, der Raumdecke zugeordneten Wärmetauscher aufweisen. Der Wärmetauscher bildet dabei eine Rohrschlange aus, die insbesondere zwischen einer tragenden und einer abgehängten Decke angeordnet und über Halteelemente an der Decke befestigt und von diesen gehalten ist, während mehrere Kühlkörper über jeweils zwei die Rohrschlange klemmend greifende Ansätze mit dieser verbunden sind. In diesem Zusammenhang werden in Bezug auf einfache Montageverhältnisse sowie einer Vermeidung von Korrosion regelmäßig Kunststoffverbundrohre mit wenigstens einer Außen- sowie einer Innenlage auf insbesondere Polyolefinbasis eingesetzt, zumal diese neben ihrer chemischen Beständigkeit gegenüber den eingesetzten Termperierfluiden während des Montagevorganges aufgrund ihrer guten Umformbarkeit an verschiedenste bauliche Gegebenheiten angepasst und in der gewünschten Weise verlegt werden können. Daraus erwächst allerdings der Nachteil, dass derartige Vorrichtungen aufgrund des schlechten Wärmeüberganges des Kunststoffverbundrohres zum Kühlkörper eine niedrige Energieeffizienz aufweisen.

Weiters sind aus dem Stand der Technik auch von einem Temperierfluid durchströmte Wärmetauscherelemente bekannt (DE 202018102124 U1), die einen wärmeleitenden Wärmeübertragungskörper umfassen. Dabei werden fluidführende Kunststoff- oder Metallrohre in Aufnahmeabschnitte mit im Wesentlichen omegaförmigem Querschnitt eingesetzt. Die Aufnahmeabschnitte bilden zudem Auflagelaschen aus, die flächig unter Ausbildung einer wärmeleitenden Verbindung auf dem Kühlkörper aufliegen, wobei beispielsweise ein wärmeleitender Klebstoff als Befestigungsmittel vorgesehen sein kann. Beim Einsatz von Kunststoffrohren besteht hier allerdings die selbe Problematik in Bezug auf eine niedrige Energieeffizienz wie in der eingangs erwähnten EP 2410246 A2. Kommen dagegen Metallrohre zum Einsatz, ergeben sich nicht nur Probleme hinsichtlich der mangelnden chemischen Beständigkeit gegenüber dem Temperierfluid. Auch Montagevorgänge gestalten sich aufgrund der gegenüber Kunststoffrohren geringeren Umformbarkeit schwieriger. Um darüber hinaus eine ausreichende Dichtheit miteinander verbundener metallischer Rohrstücke zu ermöglichen, müssen dabei entsprechende Metallrohr-Fittings zeitaufwändig mithilfe von Zusatzwerkezug montiert werden.

Daneben sind aus der WO 0201115 A1 Rohre bekannt, die eine auf ein polyolefinbasiertes Innenrohr aufgebrachte metallische Schicht, beispielsweise eine Aluminiumschicht, als Diffusionssperre aufweisen. Zur Vermeidung einer mechanischen Beschädigung dieser vorzugsweise weniger als 0,1 µm dicken Diffusionssperrschicht wird eine zusätzliche äußere Schutzschicht aufgebracht, die beispielsweise aus demselben Material wie das Innenrohr gefertigt sein kann.

Der Erfindung liegt somit die Aufgabe zugrunde, eine Vorrichtung der eingangs geschilderten Art anzugeben, die trotz raschem und einfachem Montagevorgang sowie guter Korrosionsbeständigkeit gegenüber den eingesetzten Temperierfluiden einen energieeffizienteren Betrieb ermöglicht.

Die Erfindung löst die gestellte Aufgabe dadurch, dass die Rohrschlange zur Führung des Temperierfluids ein Wärmetauscherrohr umfasst, das eine bei Gebrauch des Wärmetauschers mit dem Temperierfluid in Kontakt stehende Innenlage auf Polyolefinbasis, eine perforationsfreie Außenlage auf Aluminiumbasis sowie eine zwischen Innen- und Außenlage vorgesehene anhydridmodifizierte Haftvermittlerschicht aufweist, wobei die Außenlage unmittelbar mit den metallischen Wärmeübertragungskörpern des Wärmetauschers wärmeleitverbunden ist.

Zufolge dieser Merkmale wird ein besserer Wärmeübergang zwischen dem Temperierfluid und den, beispielsweise als Kühlkörper wirkenden Wärmeübertragungskörpern erzielt, da der Wärmewiderstand zwischen der metallischen Außenlage des Wärmetauscherrohres und dem unmittelbar damit wärmeleitverbundenen metallischen Wärmeübertragungskörper reduziert wird. Dabei wird unter einer unmittelbaren Wärmeleitverbindung verstanden, dass die Außenlage des Wärmetauscherrohres in direktem Kontakt mit der der die Außenlage zumindest abschnittsweise umschließenden Kontaktfläche des Wärmeübertragungskörpers steht, sodass keine zusätzliche, den Wärmewiderstand erhöhende Verbindungschicht eines wärmeleitfähigen Klebemittels erforderlich ist. Dadurch, dass die Innenlage auf Kunststoffbasis ausgebildet ist, können zur Verbindung mehrerer Rohrstücke einfach handhabbare Innenfittings für Kunststoffrohre verwendet werden, die rohrinnenseitig halten und abdichten, sodass ein Temperierfluidaustritt an den Verbindungsstellen und damit eine Korrosionsgefahr der metallischen Außenlage vermieden werden kann. Zur Assemblierung eines erfindungsgemäßen Wärmetauscherrohres kann ein Metallblech, vorzugsweise ein Aluminiumblech auf das durch die Innenlage und die Zwischenschicht gebildete Innenrohr aufgewickelt und beispielsweise mittels Reibschweißen zu einer geschlossenen Rohraußenlage verbunden werden. Besonders günstige Bedingungen in Bezug auf die chemische Beständigkeit, einen guten Wärmeübergang sowie eine gute Umformbarkeit der Rohrschlange ergeben sich, wenn die Innenlage aus unvernetztem Polyethylen mittlerer Dichte mit erhöhter Temperaturbeständigkeit (PE-RT), die Außenlage aus Aluminium und die haftvermittelnde Zwischenschicht für eine gute Kraftübertragung zwischen der Innen- und Außenlage bei Umformvorgängen aus Maleinsäureanhydrid modifizierten Polyolefinen gebildet wird.

Erfindungsgemäß bildet der Wärmeübertragungskörper ein metallisches Profil mit einem Grundkörper und einem davon abragenden Klemmkörper für das Rohr, wobei der Klemmkörper zwei das Rohr zwischen sich klemmend greifende Ansätze aufweist. Zufolge dieser Maßnahmen können die Wärmeübertragungskörper, deren Grundkörper im einfachsten Fall beispielsweise eine Platte ausbilden, an den Ansätzen des Klemmkörpers unmittelbar von der Rohrschlange selbst gehalten werden, während die Rohrschlange über Halteelemente, insbesondere Halteschienen gehalten und an einer entsprechenden baulichen Einrichtung befestigt wird.

In einer besonders günstigen, rohrschonenden Ausgestaltungsvariante, kann die Vorrichtung so ausgebildet sein, dass die Ansätze endseitig, insbesondere mit den Enden gegen den Grundkörper weisend, ausgebogen sind und eine Rast ausbilden, die in eine entsprechend ausgebildete Gegenrast am Halteelement, insbesondere einer Halteschiene, eingesetzt ist. Dadurch wird erreicht, dass der Wärmeübertragungsgkörper über eine Rastverbindung an den Halteschienen befestigt ist und von dieser gehalten wird, wobei die Rohrschlange in den Klemmkörpern eingeklemmt wird und somit selbst keine Haltekräfte abtragen muss.

Um einfache Rohrassemblier-sowie Montageverhältnisse zu ermöglichen, empfiehlt es sich, wenn die die Außenlage des Wärmetauscherrohres eine Wandstärke von 0,15 mm bis 0,2 mm aufweist. Dadurch wird vor allem das Umwickeln der Außenlage auf das Innenrohr sowie ein nachträgliches Umformen der Rohrschlange bei der Montage erleichtert, während gleichzeitig ein guter Wärmeübergang vom Temperierfluid auf den Wärmeübertragungskörper ermöglicht wird.

In der Zeichnung ist der Erfindungsgegenstand beispielsweise dargestellt. Es zeigen
- Fig. 1: eine erfindungsgemäße Vorrichtung in Unteransicht,
- Fig. 2: einen Schnitt entlang der Linie II - II der Fig. 1,
- Fig. 3: eine der Fig. 1 entsprechende Darstellung einer alternative Ausführungsform,
- Fig. 4: einen Schnitt entlang der Linie IV - IV der Fig. 3 und
- Fig. 5: einen schematischen Querschnitt eines erfindungsgemäßen Wärmetauscherrohres.

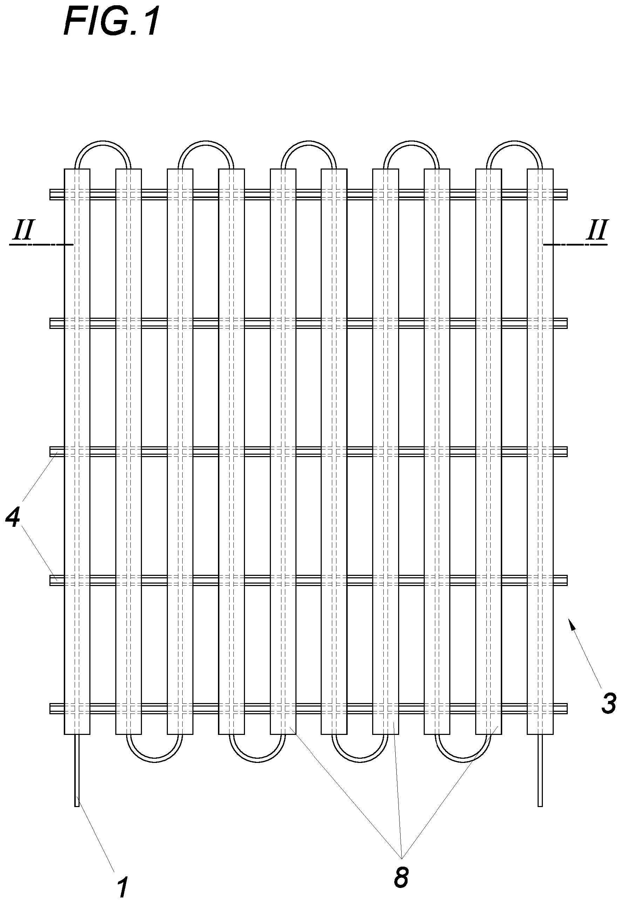

Eine erfindungsgemäße Vorrichtung weist einen Wärmetauscher 1 auf, der von einer mäanderförmig verlaufenden Rohrschlange gebildet ist, die zwischen einer tragenden Raumdecke 2 und einer abgehängten Raumdecke angeordnet und über Halteelemente 3 an der tragenden Raumdecke 2 befestigt sowie von diesen gehalten ist. In den in Fig. 1 bis 4 gezeigten Ausführungsvarianten sind die Halteelemente 3 als Halteschienen 4 ausgebildet, die beispielsweise über eine Schraubverbindung an der tragenden Raumdecke 2 montiert sind.

Die Rohrschlange umfasst zur Führung eines Temperierfluids ein Wärmetauscherrohr 5, das eine bei Gebrauch des Wärmetauschers mit dem Temperierfluid in Kontakt stehende Innenlage 6 aus PE-RT, eine perforationsfreie Außenlage 7 auf Aluminiumbasis sowie eine zwischen Innenlage 6 und Außenlage 7 eingebrachte Haftvermittlerschicht auf Polyolefinbasis, die mit Maleinsäureanhydrid modifiziert wurde, aufweist. Die Haftvermittlerschicht wird aus Gründen der besseren Übersicht in den Zeichnungen nicht explizit dargestellt. Die Außenlage 7 ist zudem unmittelbar mit Wärmeübertragungskörpern 8 aus Aluminium des Wärmetauschers wärmeleitverbunden.

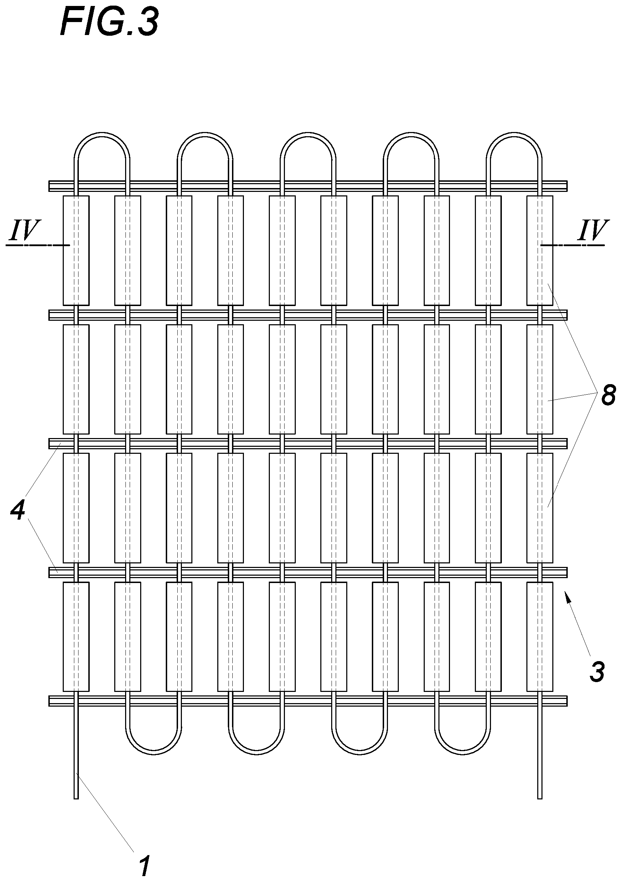

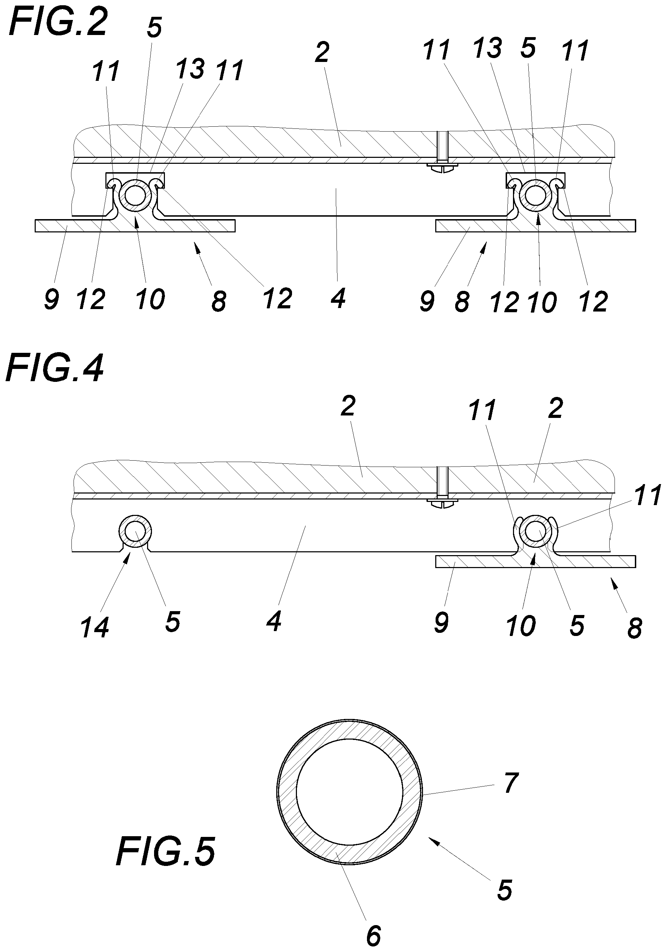

In den Fig. 2 und 4 werden Befestigungsvarianten der jeweiligen in Fig. 1 und 3 gezeigten Ausführungsformen einer erfindungsgemäßen Vorrichtung schematisch dargestellt.

Wie in Fig. 2 ersichtlich, weisen die Wärmeübertragungskörper 8 jeweils ein metallisches Profil mit einem im Wesentlichen plattenförmigen Grundkörper 9 sowie einem davon abragenden Klemmkörper 10 für das Wärmetauscherrohr 5 auf. Der Klemmkörper 10 umfasst zudem zwei das Wärmetauscherrohr 5 zwischen sich klemmend greifende Ansätze 11. In der in Fig. 2 gezeigten Ausführungsvariante sind die Ansätze 11 mit ihren Enden gegen den Grundkörper 9 weisend ausgebogen und bilden eine Rastverbindung mit entsprechenden, eine Gegenrast 12 zu den Ansätzen 11 aufweisenden Rastaufnahmen 13 der Halteschiene 4 aus. Dadurch wird sämtliche, durch die Rohrschlange sowie die Wärmeübertragungskörper 8 anfallende Gewichtskraft durch die Halteschienen 4 abgetragen.

In der in Fig. 4 gezeigten Ausführungsvariante werden die Wärmeübertragungskörper 8 kraftschlüssig über die Ansätze 11 der Klemmkörper 10 am Wärmetauscherrohr 5 gehalten. Das Wärmetauscherrohr 5 ist hierbei klemmend an Klemmaufnahmen 14 der Halteschienen 4 gehalten, wobei der in Fig.4 links dargestellte Querschnitt durch ein Wämetauscherrohr 5 lediglich zur Verdeutlichung dieses Umstandes ohne entsprechendem Wärmeübertragungselement 8 abgebildet wird.

## Patentansprüche

1. Vorrichtung zum Klimatisieren eines Raumes mit wenigstens einem einer Raumdecke (2) zugeordneten, von einem Temperierfluid durchströmten Wärmetauscher (1), sowie mit Halteelementen (3) und mit Wärmeübertragungskörpern (8), wobei der Wärmetauscher (1) von einer Rohrschlange gebildet ist, die zwischen einer tragenden Raumdecke (2) und einer abgehängten Raumdecke angeordnet und über die Halteelemente (3) an der tragenden Raumdecke (2) befestigt sowie von diesen gehalten ist, wobei die Rohrschlange zur Führung des Temperierfluids ein Wärmetauscherrohr (5) umfasst, das eine bei Gebrauch des Wärmetauschers (1) mit dem Temperierfluid in Kontakt stehende Innenlage (6) auf Polyolefinbasis, eine perforationsfreie Außenlage (7) auf Aluminiumbasis sowie eine zwischen Innenlage (6) und Außenlage (7) vorgesehene anhydridmodifizierte Haftvermittlerschicht aufweist, wobei die Außenlage (7) unmittelbar mit den metallischen Wärmeübertragungskörpern (8) des Wärmetauschers (1) wärmeleitverbunden ist, wobei der Wärmeübertragungskörper (8) ein metallisches Profil mit einem Grundkörper (9) und einem davon abragenden Klemmkörper (10) für das Wärmetauscherrohr (5) bildet, wobei der Klemmkörper (10) zwei das Wärmetauscherrohr (5) zwischen sich klemmend greifende Ansätze (11) aufweist.

2. Vorrichtung nach Anspruch 1, wobei die Ansätze (11) endseitig, insbesondere mit den Enden gegen den Grundkörper (9) weisend, ausgebogen sind und eine Rast ausbilden, die in eine entsprechend ausgebildete Gegenrast (12) am Halteelement (3), insbesondere einer Halteschiene (4), eingesetzt ist.

3. Vorrichtung nach Anspruch 1 oder 2, wobei die Außenlage (7) des Wärmetauscherrohres (5) eine Wandstärke von 0,15 mm bis 0,2 mm aufweist.

## Claims

1. Device for air-conditioning a room, comprising at least one heat exchanger (1) assigned to a ceiling (2) and having a tempering fluid flowing through it, and further comprising holding elements (3) and heat transfer bodies (8), whereby the heat exchanger (1) is formed by a pipe coil, which is arranged between a load-bearing ceiling (2) and a suspended ceiling and is attached to and held by the holding elements (3) on the load-bearing ceiling (2), whereby the pipe coil comprises a heat exchanger pipe (5) for guiding the tempering fluid, which heat exchanger pipe has an inner layer (6) based on polyolefin that is in contact with the tempering fluid when the heat exchanger (1) is in use, a non-perforated outer layer (7) based on aluminum, and an anhydride-modified adhesion promoting layer provided between the inner layer (6) and the outer layer (7), whereby the outer layer (7) is directly connected to the metallic heat transfer bodies (8) of the heat exchanger (1) in a heat-conducting manner, whereby the heat transfer body (8) forms a metallic profile with a base body (9) and a clamping body (10) protruding from it for the heat exchanger pipe (5) whereby the clamping body (10) has two projections (11) gripping the heat exchanger pipe (5) between them in a clamping manner.

2. Device according to claim 1, whereby the projections (11) are bent out at the ends, in particular with the ends pointing towards the base body (9), and form a catch which is inserted into a correspondingly formed counter catch (12) on the holding element (3), in particular a holding rail (4).

3. Device according to claim 1 or 2, whereby the outer layer (7) of the heat exchanger pipe (5) has a wall thickness of 0.15 mm to 0.2 mm.

## Revendications

1. Dispositif pour climatiser un espace avec au moins un échangeur de chaleur (1) traversé par un thermofluide et associé à un plafond (2), ainsi qu'avec des éléments de retenue (3) et avec des corps de transfert de chaleur (8), dans lequel l'échangeur de chaleur (1) est constitué par un serpentin tubulaire qui est disposé entre un plafond porteur (2) et un plafond suspendu et fixé au plafond porteur (2) par les éléments de retenue (3) et retenu par ceux-ci, dans lequel le serpentin tubulaire pour conduire le thermofluide comprend un tuyau d'échangeur de chaleur (5) qui possède une couche intérieure (6) à base de polyoléfine en contact avec le thermofluide lors de l'utilisation de l'échangeur de chaleur (1), une couche extérieure (7) non perforée à base d'aluminium ainsi qu'une couche d'agent adhésif modifiée par un anhydride prévue entre la couche intérieure (6) et la couche extérieure (7), dans lequel la couche extérieure (7) est reliée directement en conduction thermique avec les corps de transfert de chaleur (8) de l'échangeur de chaleur (1), dans lequel le corps de transfert de chaleur (8) forme un profilé métallique avec un corps de base (9) et un corps de serrage (10) saillant de celui-ci pour le tuyau d'échangeur de chaleur (5) et dans lequel le corps de serrage (10) présente deux pattes (11) agrippant par serrage le tuyau d'échangeur de chaleur (5) entre elles.

2. Dispositif selon la revendication 1, dans lequel les pattes (11) sont coudées à leurs extrémités, en particulier avec les extrémités pointant vers le corps de base (9), et forment un cran d'arrêt qui est inséré dans un contre-cran d'arrêt (12) conformé en conséquence sur l'élément de retenue (3), en particulier d'un rail de retenue (4).

3. Dispositif selon la revendication 1 ou 2, dans lequel la couche extérieure (7) du tuyau d'échangeur de chaleur (5) présente une épaisseur de paroi de 0,15 mm à 0, 2 mm.
